# EUROPEAN PATENT SPECIFICATION

(11) **EP 3 878 722 B1**
(45) Date of publication and mention of the grant of the patent: **01.05.2024**
(21) Application number: 21162084.4
(22) Date of filing: 11.03.2021
(51) Int. Cl.: B62H 3/08, F16F 9/06

(54) **TWO-WHEELER STORAGE DEVICE**
ZWEIRÄDRIGE LAGERVORRICHTUNG
DISPOSITIF DE STOCKAGE À DEUX ROUES

(30) Priority: 11.03.2020 NL 2025099
(43) Date of publication of application: 15.09.2021
(73) Proprietor: VelopA B.V., 2351 AX Leiderdorp (NL)
(72) Inventor: HAZENBOSCH, Sven, 2351 AX Leiderdorp (NL); BAKKER, Rody, 2351 AX Leiderdorp (NL)
(74) Representative: V.O.

(56) References cited:
- JP-A- H05 221 355
- JP-A- H07 207 974
- JP-A- H08 226 245
- JP-A- H08 240 027
- KR-A- 20110 073 078

## Description

### TECHNICAL FIELD

The invention relates to a two-wheeler storage device. The invention relates more particularly to a multi-store two-wheeler storage device having at least one holder arranged to hold a two-wheeler, wherein the holder is adjustable between a storage position for storing the bicycle and a loading position for loading or unloading the bicycle.

### BACKGROUND

Two-wheeler multi-store storage devices in general are well known. A two-wheeler storage device commonly comprises at least one holder for holding a two-wheeler. The two-wheeler typically can be a bicycle, an electric bicycle, or a carrier bicycle, but also - light - motor cycles may be stored in such a two-wheeler rack. The storage device may comprise a holder placed near the ground for holding a wheel of the bicycle. Such a holder typically is fixed. The multi-store two-wheeler storage device commonly also comprises at least one holder above ground, resulting in a storage device with two or more levels. The upper holder is adjustable between a storage position in which it is at a height above ground level to store the two-wheeler, and a loading position, in which it can receive or release the two-wheeler. The holder may comprise a wheel gutter. The upper wheel gutter can be pulled towards a user and towards the ground to allow the user to place its bicycle in the upper wheel gutter. After placing the bicycle in the upper wheel gutter, the upper wheel gutter can be lifted up, placing the bicycle at a certain height above a possible other bicycle already stored at the ground level wheel gutter. Such multi-store bicycle storage devices provide for a compact manner of bicycle storage, allowing a large amount of bicycles to be stored in a relatively small space, which can be especially useful in places where a high amount of bicycles are temporarily stored, such as in a railway station bicycle parking.

Commonly known two-wheeler storage devices commonly comprise an elastic element, such as a spring, arranged to assist the user when pulling down or lifting up a wheel gutter. The elastic element commonly biases the holder towards the storage position. As such, the elastic element assists the user when bringing the holder from the loading position towards the storage position and can keep the holder in the storage position. During adjustment from the storage position to the loading position, the biasing force acts against the weight of the holder and thus assists the user in pulling the holder down, to increase the user-friendliness of the rack. In that case, the user may have to apply less force to prevent the holder from falling down.

To keep the holder in the loading position, the elastic element may be configured to have a dead center. At such a dead center, the biasing force of the elastic element on the wheel gutter does not result in a moment. The moment applied by the elastic element becomes zero when the line of action of the elastic element crosses the center of rotation of the wheel gutter. This is the theoretical dead center. The sign of the moment applied by the elastic element on the wheel gutter changes when the dead center is passed. As the moment applied by the elastic element decreases towards the dead center, a point is passed wherein the total moment applied on the holder becomes zero. Beyond this point the holder will be biased towards the loading position, and the holder can remain in the loading position. Additionally, the weight of the holder, and possibly any load or bicycle thereon, induces a moment around the center of rotation of the wheel gutter which moments is towards the loading position. So, before the dead center, the biasing moment also acts against the moment induced by the weight to provide a resulting moment towards the storage position. After the dead center, the biasing moment also acts in the same direction as the moment induced by the weight, with a resulting moment towards the loading position. When lifting the holder from the loading position towards the storage position, the user first has to lift the holder upwardly, optionally against the moment of the elastic element if the dead center was passed and against the gravity force induced by the holder and a two-wheeler contained therein, until the point is reached where the total moment applied on the holder becomes zero again, after which the holder will be biased towards the storage position.

A drawback of this system is that the biasing force of the elastic element is constant, in particular when a gas spring is used, but that the weight it may counteract at one side of the dead center varies per two-wheeler. Two-wheelers, such as electric bikes or cargo bikes, are usually heavier than conventional bikes. Due to the larger weight of such bicycles, the biasing force of the elastic element may be insufficient to assist the user in counteracting the weight of the holder with bicycle during adjustment from the loading position to the storage position. Also, when adjusting the holder with bicycle from the storage position to the loading position, the holder with bicycle in fact becomes too heavy for the user to hold and the holder with bicycle then may `fall through' resulting in a relatively uncontrolled movement of the holder towards the loading position. In particular, this may happen when the dead center is passed, as then the biasing moment biases towards the loading position in addition to the moment induced by the gravity force. The holder with bicycle may then rather uncontrollable fall to the loading position. This impairs the safety of the system, and the safety of the user of the system. Also, due to the limited biasing force, the force the user has to provide for starting to pull the holder down, or for starting to lift the holder up, may be relatively lower, because the user may have to provide less moment against the biasing moment. So, a rather low operational user force may at the other hand result in an uncontrolled falling movement of the holder, when heavily loaded.

A higher biasing force of the elastic element may effectively counteract such heavy weight, but has the drawback of requiring a larger force by the user to adjust the holder. This drawback further increases when a light weight, for example a racing bike, is used in combination with a stronger elastic element. This significantly reduces the user-friendliness of the holder. So, the system either has a relatively low user force, which is perceived by the user as being a user-friendly system, but at the same time, the safety of the system is impaired when heavily loaded. Or, the system has a relatively high user force, perceived as less user-friendly, but is more safe.

As such, there is a need for an improved bicycle storage device which alleviates at least one of the aforementioned disadvantages. More particularly, there is a need for an improved bicycle storage device which is safe to use while also being easy to handle. There may be also a need for an improved bicycle storage device which is less influenced by the weight of the bicycle.

KR 2011 0073078A discloses a bicycle keeper comprising an upper holder with a power transmission means and a moving body, which can be adjusted between a storage position and a loading position. A bicycle can be placed on the moving body. The power transmission means comprises a weight connected with a chain to the moving body. The moving body is provided with a strike plate, contacting an elastic member just before the moving body is in the loading position.

Documents JP H08 226245 A, JP H 08 240027 A and JP H07 207974 A disclose a device for storing two-wheeler having a damper, a gas cylinder and a gas spring respectively.

### SUMMARY

According to an aspect of the invention, there is provided a device for storing a two-wheeler according to claim 1. Preferred embodiments are defined by dependent claims 2 to 10 and a method of adjusting a device according to any of claims 1 to 10 is defined by claim 11.

The device comprises a frame, a holder arranged to hold a two-wheeler wherein the holder is movably connected to the frame, and wherein the holder is adjustable between a storage position for storing the two-wheeler and a loading position for receiving or releasing the two-wheeler. The device comprises a biasing compound comprising an integrated biasing element and braking element, connected to the frame at one end and to the holder at the other end. The biasing element is arranged to provide a biasing force, wherein the biasing force biases the holder towards the storage position during a first part of the adjustment trajectory from the storage position to the loading position, and provides a biasing force towards the loading position in a second part of the adjustment trajectory from the storage position to the loading position. Between the first part and the second part there is the dead center of the biasing element. The biasing element may be arranged to assist a user. The biasing force biases the holder towards the storage position in the first part of the trajectory. As such, the biasing force decelerates, or at least decrease the acceleration of, the holder when the user adjusts the holder towards the loading position thus decreasing the speed at which the holder adjusts towards the loading position. The biasing force works against the weight of the holder and against the weight of a bicycle which may be held by the holder in the first trajectory. The biasing force aids, in the opposite direction, to adjust the holder towards the storage position when the user pushes the holder towards the storage position. As such, the holder is more easily lifted by the user. The biasing compound, further comprises an integrated braking element providing a braking force during adjustment of the holder towards the loading position to provide a resulting biasing moment resulting from the biasing force and the braking force, wherein the braking force increases such that the biasing moment increases non-linearly across the second part of the trajectory during adjustment of the holder towards the loading position. The second part of the trajectory may be the part of the trajectory between the dead center and the loading position, but, typically, the second part of the trajectory already starts in approaching the dead center. Thus, the non-linear increase of the braking force may already start when the biasing moment of the biasing force is still towards the storage position. Albeit, when approaching the dead center, this biasing moment becomes smaller while the braking force already non-linearly increases.

By providing a braking element generating a non-linear braking force, acceleration of the holder is limited during adjustment from the storage position to the loading, in particular when the holder is loaded with a rather heavy bicycle, and in the second part of the trajectory the weight of holder and its load is added to the biasing force resulting in a larger moment towards the loading position. Then, a counteracting non-linear braking force reduces the falling speed of the holder towards the loading position and improves the safety of the holder, in particular when with load. As such, the braking element allows a two-wheeler storage device which would otherwise be unsafe to use, to be used more safely, the user-friendliness of the system is improved. The braking element is arranged to provide a braking force towards the loading position, when adjusting from the storage position to the loading position, so towards an end of an adjustment path from the storage position to the loading position, in particular across the second part of the adjustment trajectory. The braking element then provides a non-linearly increasing braking force when the holder approaches or passes through a dead center of the elastic element, the dead center usually being near the loading position to ensure that the holder remains down in the loading position. The dead center, theoretically is defined as the position of the elastic element, and thus of the holder connected to it, in which position the working line of the biasing force of the elastic element passes the rotation center of the holder. In practice, the dead center is established when the sum of the moments, at least the biasing moment counteracting the moment generated by the weight of the holder, is zero, such that, upon passing this point, the resulting moment keeps the holder down in the loading position. Such practical dead center may be obtained before reaching the theoretical dead center. For the following disclosure, the dead center can be either the theoretical one or the practical one, and they can be used interchangeable.

The braking element may be arranged to apply a braking force on the holder independent of the biasing force applied by the biasing element. By non-linearly increasing the braking force during adjustment from the storage position to the loading position, across the second part of the adjustment path, the braking moment induced by the braking force increases as well. At the same time, the assisting biasing moment, induced by the biasing force of the elastic element, decreases when the elastic element reaches the dead center. While, an opposite moment, generated by the weight of the holder and two-wheeler thereon, increases as well during the downward movement and is towards the loading position. So, to prevent the holder from 'falling through', an increasing counter moment may be needed to give some resistance to the resulting biasing moment and gravity induced moment and acceleration thereof. A non-linearly increasing braking force with resulting non-linearly increasing braking moment, then may offer sufficient assistance to the user to safely adjust the holder. The resulting moment may be experienced by the user as being dynamic, as near the end of the adjustment trajectory there is a non-linear decrease of the resulting moment towards the loading position, which can be experienced by the user as a sudden braking of the holder.

Gas springs with a damper element exist, but the gas spring itself provides a constant biasing force, and the damper provides for a linearly increasing damper force. Such a gas spring with linear damper does however not prevent the 'falling through' of heavy loaded holders towards the loading position, because the resulting biasing moment remains linearly. Only the non-linear braking force at the end of the adjustment trajectory from the storage position to the loading position sufficiently brakes the falling movement of the holder towards the loading position. For example, an oil chamber with a floating piston and a restriction element, such as an orifice, may provide for a non-linear force.

The above is described in function of the holder passing the dead center of the biasing element. It shall however be appreciated that the two-wheeler storage device may be designed such that the dead center lies just beyond the loading position, i.e. "under the ground". In this situation, the braking element can be described as providing a braking force when the holder approaches the dead center.

It may be appreciated that the braking element is arranged, in principle, to slow down the holder during adjustment from the storage position towards the loading position across the second part of the adjustment trajectory. The braking element may not necessarily be arranged to hold the holder in a certain position, i.e. the braking element is not necessarily a holding brake. The braking element can however optionally be arranged to also function as a holding brake, for example to lock the holder in the storage position or in the loading position.

In an example, the braking element may be coupled to the biasing element. For example, the braking element may be coupled to the biasing element such that, upon increasing elongation, for a tension elastic element, or upon increasing compression, for a compression elastic element, the braking element may be induced as well. This may ensure that the braking force increases towards an end of the adjustment path from the storage position to the loading position. For example, when the elastic element is a spring, such as a coil spring, a braking element may be arranged between the ends of the spring. Such a braking element may e.g. be comprised of two parts, such as friction parts, engaging each other.

According to the invention, the braking element is integrated to the biasing element. For example, when the elastic element is a gas spring, a braking element may be integrated in an inside of the gas spring. For example as restriction openings for gas or liquid etc. In an embodiment, the biasing element may be a gas spring and the braking element may be integrated to the gas spring, e.g. as a damper integrated in the gas spring wherein the damper may be arranged to have an increasing, specifically a non-linearly increasing, damping coefficient. Dampers commonly have a substantially constant damping coefficient, which depends on the geometry of the damper and the materials used in the damper. The force supplied by such a damper depends only the velocity at which the damper is compressed or extended. The position of the damper, usually begin the amount of expansion or compression, does not influence the force supplied by such a damper. Typically, in rest position, the dampening force of the damper in the gas spring as elastic element is zero, while the biasing force of the elastic element is approximately constant, which biasing force is also present in rest position of the elastic element. It will be appreciated that a conventional type gas spring would not suffice to provide the braking force as described. In order to function as the braking element, the damper is required to provide a force which depends on the velocity with which it is operated. Dampers with an increasing damping coefficient will be discussed later on in relation to the figures. The advantage of integrating the braking element into a damper may be that the braking force applied by the damper depends on the velocity of the holder. The braking element may e.g. be implemented to the elastic element as a hydraulic damper that only becomes engaged at a final part of the adjustment path, namely when approaching the dead center when adjusting from the storage position to the loading position. For example, the elastic element can be a gas spring comprising a braking element that can be embodied as a hydraulic damper. The piston of the gas spring may then engage the braking element at an end of its stroke. As such, the elastic element provides a braking force if the holder moves at a higher velocity, e.g. near or towards the dead center. The total force and moment generated by the elastic element thus increased towards an end of the adjustment path to counteract the increasing moment of the downwardly moving holder. Such damping force is dependent on velocity, so the braking element embodied as damper may provide a larger braking force when the holder moves at higher velocity, for example due to a heavy two-wheeler being held by the holder and moving towards the loading position. On the other hand, the damper may provide a smaller braking force if the holder moves at a lower velocity, for example when the holder is empty or when a the holder holds a lighter two-wheeler. It is also mentioned that using a damper as the braking element has the advantage that the braking force is zero if the holder is not moving. The biasing element, on the other hand, always supplies a biasing force, regardless of the velocity of the holder.

Advantageously, the braking element is configured such that the braking force continuously increases during adjustment from the storage position to the loading position, wherein there is a linear increase over a first part of the trajectory from the storage position to the loading position and a non-linear increase over the second part of the trajectory. With a continuous increase, here a smooth transition is meant between the linear increase and the non-linear increase. When there is a smooth, or continuous, transition, there is a non-linear increase in the braking force as well, but the transition is smooth, e.g. represented as a bend in a graph. Alternatively, a discrete or abrupt or discontinuous transition from the first part to the second part of the braking force is provided, such as a sudden increase in the braking force, often represented as a kink in a graph. A braking force which increases continuously, or smoothly, may be arranged to provide the most force when the holder is near or at the loading position. In other words, the braking element may be arranged such that the braking force is at its minimum at the storage position and at its maximum at the loading position, wherein the braking force increases continuously when the holder is adjusted from the storage position towards the loading position. A braking force which gradually increases has the advantage that it can be easy to implement, for example as, but not limited to, a braking spring wherein the braking spring is arranged to be in resting position when the holder is in the storage position, and wherein the braking spring gradually extends or compresses when the holder is adjusted towards the loading position. Furthermore, due to the gradual increase, the user may feel a gradual assistance during the adjustment from the storage position to the loading position, which improves the safety for the user and the user-friendliness of the device. As an other example, the braking element can be implemented as two conical discs arranged such that the contact surface, and thus the friction, between the two conical discs increases as the holder is adjusted towards the loading position. The braking force over the first part of the trajectory may be linearly increasing, or may be about zero as well.

Advantageously, the braking element may be configured such that the braking force discretely increases during adjustment from the storage position to the loading position, there may thus be a discrete or abrupt transition between the linearly increasing first part and the non-linearly increasing second part. A braking element wherein the braking force may be increased or decreased in defined steps allows for a two-wheeler storage device wherein the braking element applies a predetermined braking force at a predetermined point. As such, the braking element can be arranged to provide no braking force at all at points where braking is unnecessary, such as in the storage position.

Advantageously, the braking element may be configured such that the braking force may be substantially zero over the first part, before a final part of the adjustment trajectory from the storage position to the loading position, and the braking force is substantially non-zero and non-linear across the final part of the adjustment from the storage position to the loading position. Such a final part may for example be the part of the adjustment path just before the dead center, and the part after the dead center, during adjustment from the storage position to the loading position. As such, the braking element may be arranged such that no braking force is applied along a first part of the adjustment from the storage position to the loading position starting at the storage position. A braking force can increase the handling difficulty of the holder if the braking force is applied when the forces applied by the biasing element and gravity are less significant, which can for example be the case in the storage position.

Advantageously, the braking element may be configured such that the braking force may be zero when the holder is adjusted from the loading position towards the storage position. As such the braking element can be arranged to only brake the holder when the holder is adjusted towards the ground, and not when the holder is lifted up by a user, thus making the holder easier to lift.

For example, in the gas spring, a further piston, typically a floating piston, may be provided resulting in a third chamber that can be filled with gas or fluid. By providing orifices in the floating piston, and possibly also one-way restrictions therein, in addition with e.g. a changing diameter of the chamber, a non-linear force can be provided additionally to the biasing force of the gas spring piston moving through the gas spring chambers.

Advantageously, the braking element may be arranged such that the braking force further depends on a velocity, or an acceleration, of the holder. The braking element may for example be arranged such that the braking force increases when the velocity of the holder increases, resulting also in a non-linear braking force. This can be advantageous, for example, to achieve an increased non-linear braking force when the holder is falling down, but also to achieve a decreased braking force when a user is slowly lifting the holder. By providing a velocity dependent braking element, the device can be arranged to receive heavier bicycles. Upon adjusting a heavier bicycle from the storage position to the loading position, the holder could achieve a higher velocity. The higher velocity would however result in a higher braking force, which in turn would slow down the holder. As such, providing a velocity dependent braking element a bicycle storage device can be achieved with consistent safety and ease of use substantially independent of the weight of the bike.

Advantageously, the biasing element is an elastic element. Advantageously, the elastic element may be a compression element or a tension element. Advantageously, the biasing element may be a gas spring.

According to the invention, the gas spring is then provided with an integrated braking element.

Advantageously, the holder may comprise a gutter for receiving at least one wheel of the two-wheeler.

Advantageously, the holder may be movably connected to the frame at a height such that a further two-wheeler may be stored below the holder in storage position.

Advantageously, the device may comprise a plurality of holders.

According to an aspect, there is provided a method for adjusting a holder of a multi-store bicycle rack between a storage position for storing the bicycle and a loading position for loading or unloading the bicycle, wherein the rack comprises a biasing element for biasing the holder towards the storage position, the biasing element inducing a biasing moment during adjustment of the holder, wherein, during adjustment from the storage position to the loading position a braking force is applied such that a resulting biasing moment increases towards the loading position during adjustment from storage position to loading position.

### BRIEF DESCRIPTION OF THE FIGURES

The disclosure and various aspects of the disclosure are elucidated with reference to the drawing. The drawing is given by way of exemplary embodiments. In the drawing shows:
Fig. 1A shows a schematic representation of an example not claimed by the invention.
Fig. 1B shows a schematic representation of an example not claimed by the invention.
Fig. 2A shows a schematic representation of an embodiment of the invention.
Fig. 2B shows a schematic representation of an embodiment of the invention.
Fig. 3A shows a partial schematic representation of the embodiment shown in Fig. 2A
Fig. 3B shows a partial schematic representation of the embodiment shown in Fig. 2B
Fig. 4 shows a schematic representation of a part of the example, not claimed by the invention, according to Figs. 1A and 1B.
Fig. 5 shows a cross sectional schematic representation of a part of an embodiment.
Fig. 6 shows a cross sectional schematic representation of a part of an embodiment.
Fig. 7 shows a cross sectional schematic representation of a part of an embodiment.
Fig. 8 shows a schematic representation of a moment-position graph.
Fig. 9A shows a schematic representation of a force-position graph with a position independent braking force in a prior art system.
Fig. 9B shows a schematic representation of a force-position graph with a position dependent braking force in a system according to the invention.

### DETAILED DESCRIPTION OF THE FIGURES

In the figures reference numerals are used to refer to identical or functionally similar elements throughout the separate views. The figures serve to further illustrate embodiments of aspects that include the claimed invention.

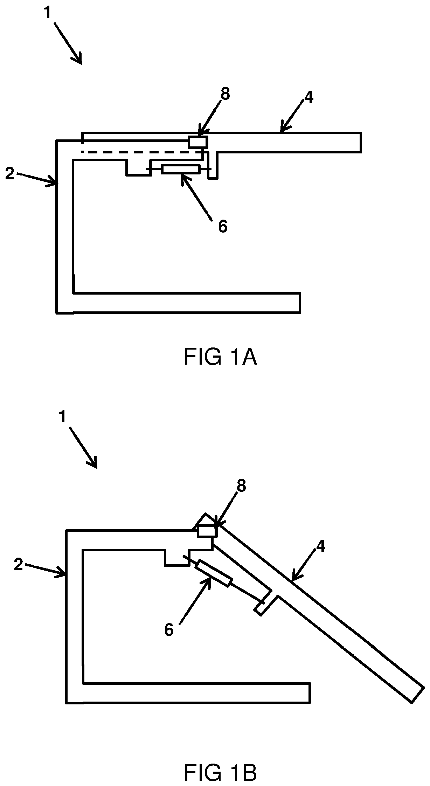

Figs. 1A and 1B show a schematic representation of an example not claimed by the invention. A two-wheeler storage device 1 is shown comprising a frame 2. The frame 2 may be fixed to the surroundings, or it may be resting on the ground without being connected to the ground. The device 1 comprises a holder 4 movably connected to the frame 2. The holder 4 is arranged to be adjusted between a storage position for storing a bicycle and a loading position for receiving or releasing the two-wheeler. Fig. 1A shows the holder 4 in the storage position. Fig. 1B shows the holder 4 in the loading position. Adjusting the holder 4 between the storage position and the loading position comprises pulling the holder 4 backwards over the frame 2. At some point the holder 4 can become pivotable. The holder 4 can then be pivoted until one end of the holder 4 rests on the ground. In some embodiments, the holder 4 is only pivoted, without a translational movement.

The holder 4 is arranged to hold a two-wheeler (not shown). The holder 4 can comprise a gutter (not shown) which receives at least one wheel of the two-wheeler. The frame 2 is also arranged to hold a two-wheeler underneath the holder 4 in such a way that a two-wheeler of reasonable dimensions does not hinder the holder 4 in being adjusted from the storage position to the loading position or vice versa. Due to the view of Figs. 1A and 1B, only a single two-wheeler may appear to be stored in the holder 4 and a only a single two-wheeler may appear to be stored on the ground, and the two two-wheelers would appear to be stored vertically above each other. It shall however be appreciated that the frame 2 can be arranged such that a plurality of two-wheelers can be stored on a plurality of holders 4. The frame 2 can also be arranged to have a staggered configuration with relation to the two-wheelers in the holders 4 and the two-wheelers on the ground. The staggered configuration increases the accessibility to the two-wheelers stored in the holders 4, therefore increasing the ease of use for the user.

The device 1 comprises a biasing element 6, such as a gas spring 6, connected to the frame 2 and the holder 4. Preferably, an end of the gas spring 6 is connected to the frame 2 and another, opposite, end of the gas spring 6 is connected to the holder 4. As such, a compact construction can be obtained without the need for further discs or elements etc.

The biasing element 6 is arranged to provide a biasing force. The biasing force induces a biasing moment that biases the holder 4 towards the storage position, at least along a first part of the adjustment trajectory from the storage position towards the loading position. When the adjustment trajectory has a dead center in which the biasing force does not generate a moment around the rotating axis of the holder, the biasing force induces a biasing moment towards the storage position in a first part of the trajectory before reaching the dead center and induces a moment towards the loading position in a second part of the trajectory after having passed through the dead center during the adjustment from the storage position towards the loading position. The biasing force depends on the type of biasing element 6 used and how the biasing element 6 is connected to the frame 2 and the holder 4. The disclosure is not limited to a specific type of biasing element 6, and all specific examples of biasing elements are to be seen as specific examples and not as limiting to the claimed subject matter. In Figs. 1A and 1B, the biasing element 6 works to push the holder 4 away from the frame 2. Due to the biasing element 6 being arranged underneath a pivoting point of the holder 4, pushing away the holder 4 results in the biasing element 6 pushing the holder 4 upwards towards the storage position.

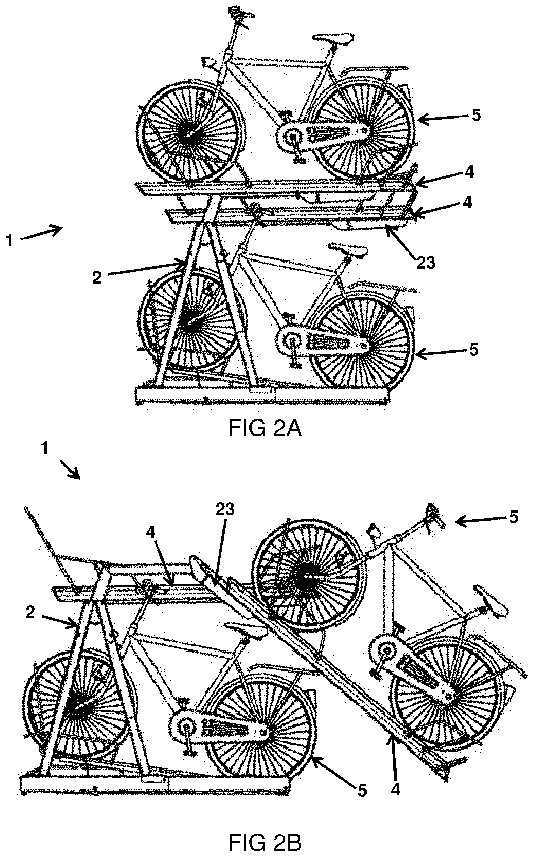

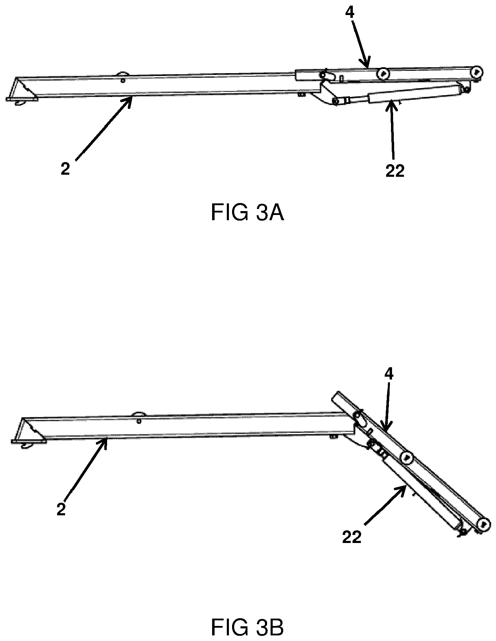

As described hereinabove, the biasing element 6 is arranged to push the holder 4 towards the storage position. It shall be appreciated that due to the nature of the mechanism used in bicycle storage devices, many configurations are possible. A designer of a bicycle storage device can for example choose between a pulling biasing element and a pushing biasing element. Independently of whether he chose a pulling or a pushing biasing element, the designer has a choice in whether the biasing element extends, compresses, or remains at roughly the same extension/compression when the holder is adjusted from the storage position to the holding position. The designer can also choose whether the biasing element rotates along with the holder, along with the frame or on its own, somewhere in between the orientation of the frame and the holder The biasing element 6 shown in Figs. 1A and 1B for example is a pushing biasing element which extends when the holder 2 is adjusted from the storage position to the loading position and which has a rotational orientation lying between the frame 2 and the holder 4. Figs 2A, 2B, 3A and 3B illustrate a different situation. Typically, the biasing element 6 is a gas spring, having a constant biasing force. The changing arm of the biasing force around a rotation axis of the holder 4 during adjustment of the holder 4, results in a changing biasing moment, thus providing varying support to the user.

Turning back to Figs. 1A and 1B, the device 1 comprises a braking element 8 providing a braking force during adjustment of the holder towards the loading position to provide a resulting biasing moment resulting from the biasing force and the braking force. The braking element 8 is shown as a separate element in this example, not claimed by the invention, but, is preferably integrated into the gas spring 6.

The braking force is speed dependent on the velocity of the holder 4 during adjustment of the holder 4 from the storage position towards the loading position. When the holder 4 is in storage position, the braking force is zero, and when the holder 4 is approaching the loading position, the braking force increases non-linearly to reduce the velocity of the falling holder, and, thus, to brake the falling holder. The non-linear increase in braking force occurs in the second part of the trajectory. In the first part of the trajectory, the braking force can be zero or substantially zero, or can be linearly increasing. In the reverse movement, adjustment of the holder from the loading position to the storage position, the braking element is preferably configured to provide a constant braking force, which can be zero when the holder is loaded, but which can be non-zero when the holder is empty and not loaded, to avoid a spring back of the non-loaded holder to the storage position.

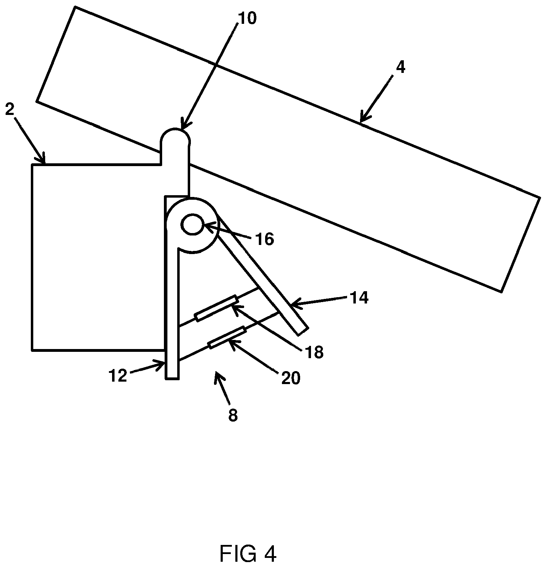

The braking element 8 slows down the holder 4 when the holder is adjusted towards the ground. The braking force is commonly the result of the braking element 8 having two or more components moving with relation to each other. Friction between these two or more components result in the kinetical energy of the components being transformed into thermal energy, thus slowing down the moving components. These components can for example be solids, such as two braking discs sliding across each other, or a combination of a solid and a fluid, such as a viscous damper. As illustrated in Figs. 1A and 1B, the braking element 8 is arranged near a pivot point around which the holder 4 pivots when adjusted between the storage position and the loading position. The braking element 8 is represented schematically. The disclosure is not limited to a specific type of braking element 8, and all specific examples of braking elements are to be seen as specific examples and not as limiting to the claimed subject matter. The braking element 8 illustrated here can for example be a braking hinge 8, as illustrated in Fig 4.

It shall be appreciated that the frame 2 can be fixedly connected to the floor and/or a wall, or that the frame 2 is simply positioned on the floor. In an other embodiment, the frame 2 can be mounted to the wall and comprise only the upper holder. In other words, the frame 2 is to be understood as any kind of frame 2 to which a holder 4 and the biasing element 6 can be connected such that the holder and the biasing element are able to fulfill their functions as disclosed herein.

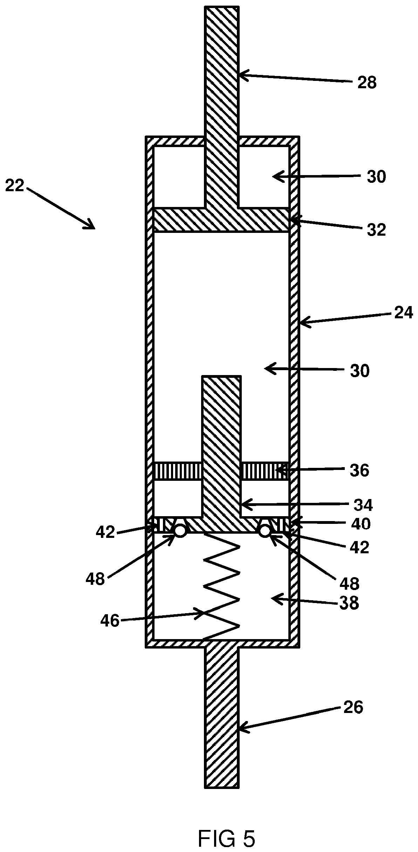

In Figs. 1A and 1B, an example not claimed by the invention, wherein the biasing element 6 and the braking element 8 are shown as two separate elements. It shall however be appreciated that in the claimed embodiments the biasing element 6 and the braking element 8 are integrated in a single component. An example of such a component is illustrated in Fig. 5

Figs. 2A and 2B show a schematic representation of an embodiment of the invention. A two-wheeler storage device 1 having a frame 2 and two holders 4 is shown. Fig. 2A shows the device 1 in the storage position. Fig. 2B shows the device 1 in the loading position. Both the frame 2 and one of the holders 4 hold a bicycle 5. In the embodiment illustrated in Figs. 2A and 2B the biasing element 6 and braking element 8 are combined in a compound 22. The compound 22 is covered by a cover 23. The cover 23 protects the compound 22 from exposure to weather conditions and other possible types of damage.

Figs. 3A and 3B show a partial schematic representation of the embodiment shown in Figs. 2A and 2B wherein the bicycles 5, the cover 23 and large parts of the frame 2 and the holder 4 are not shown. Figs. 3A and 3B show a part of the frame 2, a part of the holder 4 and the compound 22 which combines the biasing element 6 and the braking element 8. Fig. 3A shows the holder 4 in the storage position. Fig. 3B shows the holder 4 in the loading position. The embodiment shown in Figs. 3A and 3B differs from the embodiment shown in Figs. 1A and 1B in that the compound 22 is arranged to be compressed instead of extended when the holder 4 is adjusted from the storage position to the loading position. The compound 22 is also arranged to rotate substantially along with the holder 4 instead of having a rotational orientation lying between the frame 2 and the holder 4. The compound 22 does however function as a pushing biasing element, just like the biasing element 6 illustrated in Figs. 1A and 1B.

A schematic cross section of the compound 22 is illustrated in Fig. 5 and described hereinafter. Fig. 4 shows a schematic representation a part of the example according to Figs. 1A and 1B, not claimed by the invention. The holder 4 is shown connected to the frame 2 at a pivotal point 10. The holder 4 is positioned at an intermediate position in between the storage position and the loading position. The braking element 8 is embodied here as a braking hinge 8. The braking hinge 8 is fixedly connected to the frame 2 by a first hinge leaf 12. The first leaf 12 can for example be bolted or screwed to the frame 2. A second hinge leaf 14 is rotatably connected to the first hinge leaf 12 by a hinge pin 16, as is commonly known. A hinge damper 18 is mounted in between the first leaf 12 and the second leaf 14. The hinge damper 18 can for example be a viscous damper such as a standard fluid damper 18.

The holder 4 is not connected to the second leaf 14, but will engage the second leaf 14 when the holder 4 approaches the loading position. The holder 4 will push the second leaf 14 towards the first leaf 12. The hinge damper 18 will be compressed between the first leaf 12 and the second leaf 14. A standard fluid damper 18 reacts to this compression by pressing against the motion of the holder 4 due to viscous friction occurring inside the fluid damper 18. The viscous friction inside the fluid damper 18 transforms the motion of the holder 4 into heat. As such, the fluid damper 18 provides the braking force which slows down the holder 4 as the holder 4 approaches the loading position. The braking force applied by the fluid damper 18 depends on the velocity with which the fluid damper 18 is compressed. More specifically, the braking force increases as the compression velocity increases. As such, the braking force provided by the braking element 8 increases as the falling speed of the holder 4 increases. The braking element 8 may thus provide a high braking force when the holder 4 falls to ground or a low braking force when the holder 4 is dropped gently. A high braking force can for example be advantageous when the holder 4 is adjusted from the storage position to the loading position while holding a heavy electric bicycle. A low braking force can for example be advantageous when the holder 4 is adjusted from the storage position to the loading position while being empty.

As mentioned before, the second leaf 14 is not connected to the holder 4. A result hereof is that the braking element 8 only brakes the holder 4 when the holder 4 descends beyond a certain height. A second advantage hereof is that the braking hinge 8 does not brake the holder 4 when the holder 4 is lifted. As such a user is able to lift the holder 4 without having to worry about the braking hinge 8 slowing down the holder 4. In an other example, the second leaf 14 is connected to the holder 4. Here, the braking hinge 8 may provide a braking force during adjustment of the holder 4 independent of the direction in which the holder 4 is adjusted.

Referring back to the example, not claimed by the invention, illustrated in Fig. 4, the braking hinge further comprises a braking spring 20 mounted between the first leaf 12 and the second leaf 14. The braking spring 20 is arranged to push the second leaf 14 away from the first leaf 12 when the holder 4 is adjusted from the loading position to the storage position. To achieve this, the braking spring 20 is dimensioned such that it is strong enough to push the second leaf 14 away from the first leaf 12 against the braking force of the fluid damper 18, but the braking spring 20 is also weak enough such that a force applied by the braking spring 20 on the second leaf 14 is insignificant when the holder 4 is adjusted from the storage position to the loading position. In other words, the braking spring 20 is not strong enough to provide a force discernible by a user. A two-wheeler is commonly stored for more than a few minutes, if not a couple of hours. However, a situation might occur wherein the holder 4 is adjusted multiple times in a short time period. Suppose, for example, a user who just stored their bicycle realizes he forgot his wallet in a cycle bag attached to his bicycle, prompting him to adjusting the holder 4 back to the loading position right after he had adjusted the holder 4 to the storage position. In this situation it would be feasible that the braking spring 20 has reopened the braking hinge 8 completely or almost completely in a timespan of a few seconds. Optimally, the braking spring 20 reopens the braking hinge 8 in the time required to adjust the holder 4 from the loading position to the storage position.

The fluid damper 18 can be arranged to have a lower flow resistance during extension of the fluid damper 18 than during compression of the fluid damper 18. A piston of the fluid damper 18 can for example comprise one way valves allowing a higher flow rate during extension, thus decreasing the flow resistance during extension. As such a fluid damper 18 can be provided which is easily opened by the braking spring 20.

In Figs. 1A, 1B and 4, the braking element 8 and the biasing element 6 are illustrated as two different components. In an other embodiment of the invention, the braking element 8 and the biasing element 6 are combined to a biasing compound 22. Fig. 5 shows a cross sectional schematic representation of an embodiment of the biasing compound 22. The compound 22 comprises a compound housing 24. The compound housing 24 is fixedly connected to a first shaft 26. The first shaft 26 can for example be connected to the frame 2. The compound 22 further comprises a second shaft 28 which is movably received by the compound housing 24. The second shaft 28 can for example be connected to the holder 4. The second shaft 28 extends into the compound housing 24 into a gas spring chamber 30. The gas spring chamber 30 is divided by a gas spring piston 32 which is fixedly connected to the second shaft 28. The two shafts 26, 28, the gas spring chamber 30 and the gas spring piston 32 provide a functionality comparable to the biasing element 8.

The compound 22 further comprises a braking shaft 34 which is movably received by an inner wall 36 of the compound housing 24. The braking shaft 34 extends partially into a braking chamber 38 filled with a liquid, for example with oil. The inner wall 36 is movable arranged inside the housing 24 to prevent the oil pressure inside the braking chamber 38 to increase or decrease due to the braking shaft 34 moving in or out the braking chamber 38.The braking shaft 34 is fixedly connected to a braking piston 40. The braking piston 40 comprises a plurality of holes 42. The holes 42 are arranged to allow a fluid to flow from one side of the braking piston 40 to an other side of the braking piston 40. The viscous friction of the oil flowing through the holes 42 provides the braking force by transforming the motion of the oil into heat. The braking shaft 34, the braking piston 40 and the braking chamber 38 together function as a damper, comparable with the hinge damper 18 illustrated in Fig. 4.

The compound 22 combines the functionality of the biasing element 6 and the braking element 8. As the holder 4 is adjusted from the storage position to the loading position, the second shaft 28 is pushed further inside the compound housing 24. The second shaft 28 is pushed inwards until the gas spring piston 32 engages the braking shaft 34. Up to this point the compound 22 functioned as the biasing element 6. Hereafter the braking shaft 34 is pushed inwards along with the second shaft 28. The flow resistance of the braking piston 40 results in a braking force being applied by the braking piston 40 onto the braking shaft 34, which in turn applies the braking force onto the holder 4 via the second shaft 28. Here the compound 22 provides both the biasing force and the braking force. As with the example illustrated in Fig. 4, the braking force is only applied to the holder 4 when the holder 4 is near the loading position. The gas spring piston 32 disengages the braking shaft 34 when the holder 4 is lifted up. The compound 22 therefore does not apply a braking force when the holder 4 is adjusted from the loading position to the storage position. As such a user is able to lift the holder 4 without having to worry about the compound 22 slowing down the holder 4. In an other embodiment of the compound 22, the braking shaft 34 is connected to the gas spring piston 32. Here, the compound 22 may provide a braking force during adjustment of the holder 4 independent of the direction in which the holder 4 is adjusted.

Referring back to the embodiment illustrated in Fig. 5, the flow resistance of the braking piston 40 depends on the velocity of the braking piston 40 which in turn depends on the velocity of the holder 4. The flow resistance is proportionate to the velocity of the holder 4. As such, a higher braking force will be provided by the compound 22 when the holder 4 falls at a higher speed. As opposed, a lower braking force will be provided by the compound 22 when the holder 4 is dropped at a lower speed. A high braking force can for example be advantageous when the holder 4 is adjusted from the storage position to the loading position while holding a heavy electric two-wheeler. A low braking force can for example be advantageous when the holder 4 is adjusted from the storage position to the loading position while not holding a two-wheeler or while holding a light two-wheeler.

The compound 22 further comprises a braking spring 46 attached to the braking piston 40 and the compound housing 24. The braking spring 46 arranged to push the braking piston 40 back towards the second shaft 28 when the holder 4 is adjusted from the loading position to the storage position. The braking spring 46 is dimensioned such that it is strong enough to push the braking piston 40 away, but weak enough such that the force applied by the braking spring 46 is insignificant when the holder 4 is lowered down to the loading position. The braking piston 40 further comprises one-way valves 48. The one-way valves 48 are arranged to be closed when the braking piston 40 moves towards the first shaft 26 and to be open when the braking piston 40 moves towards the second shaft 28. As a result hereof, the flow resistance of the braking piston 40 depends on the direction in which the braking piston 40 is moving. The flow resistance is high when the holder 4 is approaching the loading position as to provide the braking force. The flow resistance is low when the braking piston 40 is pushed towards the second shaft 28 by the braking spring 46. As such, the one-way valves 48 allow for an adequate braking force to be provided when the holder 4 is approaching the loading position while also allowing a relatively weak force to be required by the braking spring 46 in order to move the braking piston back towards the second shaft 28.

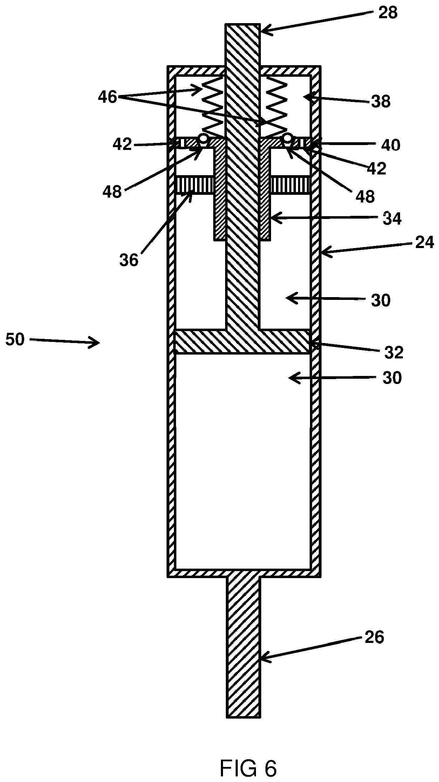

The embodiment illustrated in Fig. 5 assumes that the compound 22 functions as a compression spring, i.e. the compound 22 is biased to push the second shaft 28 away from the first shaft 26. It shall however be appreciated that the compound 22 can also be arranged to function as a tension spring, i.e. the compound 22 can be arranged to bias the second shaft 28 towards the first shaft 26. Fig. 6 shows a cross sectional schematic representation of a biasing compound 50 arranged to bias the second shaft 28 towards the first shaft 26. The first shaft 26 is connected to the frame 2, and the second shaft 28 is connected to the holder 4 in such a way that the second shaft 28 is pulled away from the first shaft 26 as the holder 4 is adjusted from the storage position to the loading position. Here, the braking shaft 34 is a hollow braking shaft 34 through which the second shaft 28 extends. Upon extension of the compound 50, the gas spring piston 32 will engage the braking shaft 34, causing oil to flow through the holes 40 generating heat due to viscous friction, resulting in a braking functionality analogue to the embodiment illustrated in Fig. 5.

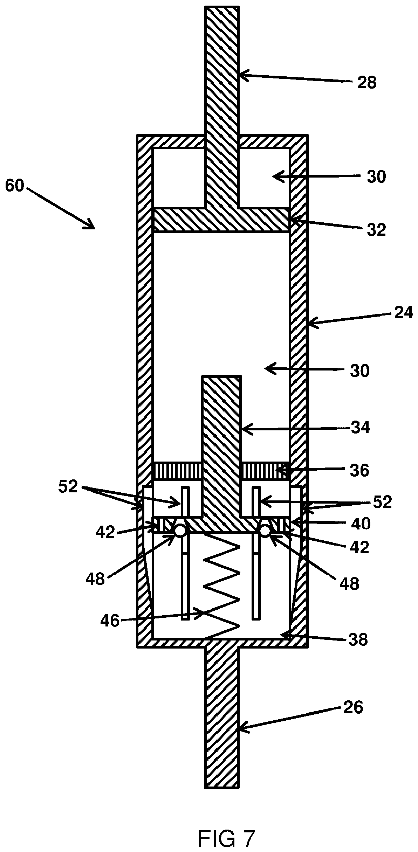

Turning now to Fig. 7, an embodiment of a compound 60 is shown. The compound 60 can be seen as the compound 22 according to Fig. 5, further comprising grooves 52. In the embodiment shown in Fig. 7, the housing 24 is thicker to accommodate the grooves 52. The grooves 52 influence the viscous resistance of the oil passing the braking piston 40, acting as an additional passage for the oil beside the holes 40. The cross sectional area of the grooves 52 as seen in a plane perpendicular to the longitudinal direction of the compound 22 decides the viscous resistance of the oil when the braking piston 40 is positioned in that plane. The cross sectional area of the grooves 52 can be varied, resulting in the viscous friction, and thus the braking force, being dependent on the position of the braking piston 40, and thus on the position of the holder 4. The cross sectional area of the grooves 52 as illustrated in Fig. 7 decrease towards the first shaft 26. As such, the flow resistance shall increase as the braking piston 40 moves towards the first shaft 26. The grooves 52 can for example be designed such that the flow resistance of the oil is at its highest when the holder 4 is at or near the dead center of the compound 22.

The grooves 52 influence the damping coefficient. The damping coefficient decreases as the cross sectional area of the grooves increases. The result thereof is that the braking force applied by the compound 60 depends not only on the velocity of the braking piston 40, but also on the position of the braking piston 40 in the braking chamber 38. The damping coefficient is low if the braking piston 40 is at the upper side of the grooves 52, where the cross sectional area of the grooves 52 is at its highest. In this position, movement of the braking piston 40 would result in a relatively small braking force. The damping coefficient is high if the braking piston 40 is at the bottom side of the braking chamber 38, where no grooves 52 are present. In this position, movement of the braking piston 40 would result in a relatively high braking force. Nonetheless, it shall be appreciated that the braking force is always zero if the velocity of the braking piston 40 is zero.

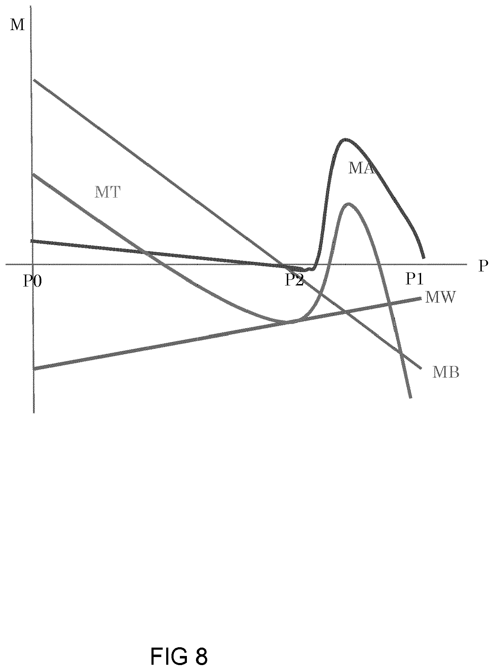

Fig. 8 shows a moment-position graph. The graph represents a theoretical situation wherein all the components, and especially the force applied by these components, depend only on the angular position of the holder 4, although the braking force also depends on the velocity of the holder. The graph in Fig. 8 is intended for explanatory purposes only. The horizontal axis P represents the angular position of the holder, with the position P0 being the storage position, and the position P1 being the loading position. Between the storage position P0 and the loading position P1, there is the dead center P2. The vertical axis M represents the moments applied on the holder 4 by the various forces: the biasing force FB, the weight FW, the braking force FA. The moment resulting from these force is force times the arm, the arm being the distance between the rotation axis and the force line, i.e. the working line of the force. For example, the working line of the biasing force and the braking force coincides with the central axis of the biasing element. The rotation axis is the axis around which the holder rotates when being adjusted between the storage position and the loading position. The biasing force of the biasing element is theoretically constant, in particular when a gas spring is used. The biasing force has a working line along a central axis of the biasing element, and when the holder is adjusted from the storage position to the loading position, the position of the gas spring changes, and thus, the biasing moment, changes as well, because the arm of the biasing force around the rotation axis of the holder changes. This is illustrated by line MB. When system is provided with a dead center, being the position of the biasing element in which the working line of the biasing force goes through the rotation axis, and thus there is no resulting biasing moment in that position, the biasing moment is positive towards the storage position before the dead center, and negative towards the loading position after the dead center.

Further, the weight of the holder FW, which is higher when there is load, such as a bicycle, on it, also induces a moment around the rotation axis during the adjustment of the holder from the storage position to the loading position. The moment induced by the weight, indicated as MW, is always negative, towards the loading position, and reduces when approaching the loading position due to the reducing arm of the weight around the rotation axis.

Further, the braking element also provides for a braking force FA. The braking force increases non-linearly in a second, final, part of the trajectory, when approaching the loading position. This non-linear increase in force, also induces a non-linear increase in moment, illustrated by the line MA. In the first part of the trajectory, the braking force can be constant, e.g. about zero, but can be linearly increasing as well. In this theoretical example, the braking force is about zero and about constant in the first part of the trajectory. Although the arm of the braking force slightly decreases during the adjustment in the first part of the trajectory from the storage position to the loading position, this may barely be noticeable in the moment. A small force times an arm still gives a small moment. But the non-linear, abrupt or sudden, increase in the braking force induces a non-linear moment as well.

All these moments together, result in a resulting moment on the holder, which is experienced by the user as 'force'. The users force experience is proportional to the resulting moment. This is because the user has to deliver a force, that times the arm, provides a moment to counteract the resulting moment. The resulting moment is illustrated by line MT, and is equivalent to the user experience. In this theoretical example, the resulting moment MT becomes zero, and thus has a dead point, at a position different from the dead center of the biasing element, due to the weight induced moment. This dead point also changes with the load on the holder. In practice, the dead point of the total moment and the dead center of the biasing moment, are rather close to each other, such that the user experiences hardly any difference when operating a heavy loaded holder or a more lightweight loaded holder.

It shall be appreciated that without the braking force FA, the total force FT would continue to decrease between position P2 and the loading position P 1. As such the holder 4 would become increasingly more difficult to handle as the loading position P1 is approached and it would be quite difficult for a user to handle the holder 4 at the loading position P 1.

As mentioned hereinabove, the graph of Fig. 8 assumes all the components to apply a force independent on the velocity of the holder 4. In some embodiments, however, an oil chamber with a floating piston having a restriction element, such as an orifice, can be used as the braking element, and the braking force is dependent on the oil flowing through the orifice restriction. The force supplied by such a braking element primarily depends on the velocity of the holder 4. This is advantageous for a two-wheeler storage device, as the damper may thus apply a large braking force if the holder 4 moves at a high velocity. A high velocity may for example occur when a heavy two-wheeler is lowered. On the other hand, the damper may apply a small braking force if the holder moves at a slow velocity, for example when the holder is empty or when a the holder holds a light two-wheeler. It is also repeated that using a damper as the braking element has the advantage that the braking force is zero if the holder is not moving. The biasing element, on the other hand, always supplies a biasing force, regardless of the velocity of the holder.

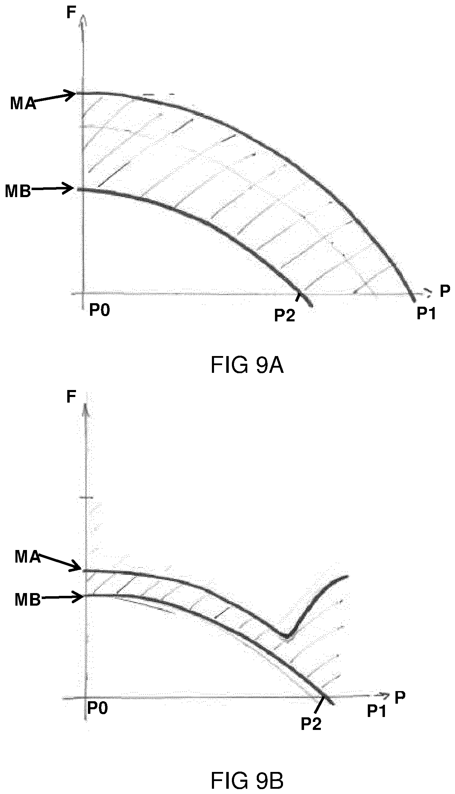

Not any kind of damper, however, can be used efficiently. Fig. 9A, for example, shows a schematic representation of a force-position graph wherein a biasing element having a damper with a constant damping coefficient is used. Fig. 9A is to be seen as a representation of the state of the art. The graph in Fig. 9A assumes a theoretical, non-zero constant velocity of the holder 2. The velocity has to be non-zero, because otherwise the damper would not apply any force at all. The force of the damper is dependent on the velocity, and, therefore, considered dynamic. The velocity is also theoretical, as it is practically impossible the have a perfectly constant velocity, especially at the storage position and the loading position, where the velocity is expected to be zero. The vertical axis of the graph represents force as applied on the holder 4, as experienced by the user. The force experienced by the user, or to be applied by the user is equivalent to the resulting moment the biasing force and damping force apply to the holder. The horizontal axis represents the position P of the holder 4, with the storage position P0 at one end, with the angle alpha being zero, and the loading position P1 at an other end of the horizontal axis. Fig. 9A only shows the biasing moment MB and the braking moment MA, but it will be appreciated that the remaining forces mentioned in relation to Fig. 8 are also at work in the situations described by Fig. 9A. The biasing moment MB becomes zero at the dead center P2 of the biasing element, at which point the biasing force has no working arm with respect to a rotation axis of the holder.

The graph aims to illustrate that the use of a damper with a constant damping coefficient results in a relatively high braking moment MA at any point between the storage position P0 and the loading position P1. This is advantageous near or at the dead center P2, where the high braking moment MA prevents the holder 4 from moving, or falling, at a high velocity. As such the situation described in Fig. 9A would be a safe situation. Aside from the dead center P2, however, the high braking force MA would be disadvantageous. If the holder 2 is near the storage position P0 for example, the high braking force MA would require a user to apply a high force in order to move the holder 4 towards the storage position counteracting the braking force. As such, the two-wheeler storage device described in Fig. 9A would be hard to use, albeit safe, but the overall user friendliness would be negative due to the too high operational force required.

Fig. 9B shows a graph analogue to the graph of Fig. 9A but with a type of biasing element according to the invention. The graph of Fig. 9B represents a two-wheeler storage device according to the invention, having a damper with a damping coefficient which increases as the holder 4 moves towards the loading position P1. The damping coefficient is non-linear, and the non-linear increase is provided over the second part of the trajectory during adjustment from the storage position towards the loading position. An example of such a damper is described in Fig. 7. It shall be appreciated that the two-wheeler storage device described by the graph of Fig. 9B is safe to use, as the damper provides a high braking force FB if the holder 4 is near or at the dead center P2. The moment provided by the biasing force is the same as in fig. 9A, the biasing force being more or less constant over the trajectory, while the arm of the biasing force with respect to the rotation axis changes over the trajectory, resulting in a varying moment over the trajectory. The braking element, or here, damper with the non-linear braking force over the second part of the trajectory, may have a constant, zero or non-zero, damping coefficient. Here too, there is a theoretical situation represented with the holder having a non-zero velocity over the trajectory, which is of course in P0 and P1, when the holder is in the storage position and the loading position, in practice zero. Here, over the first part of the trajectory, there is a braking moment provided by the damper with a smaller damping coefficient than in Fig. 9A. Over the second part of the trajectory, the braking force, and thus the braking moment increases non-linearly, thus providing for a braking of the falling holder, and a reduce of the falling velocity of the holder towards the loading position. The user experiences this non-linear reduction of velocity as a brake, which provides for an improved user-friendliness, while the user operational force to push the holder towards the storage position can be rather low. On the other hand, the two-wheeler storage device is also easy to use, as the damper is configured to provide a low braking moment MB if the holder 4 is not near or at the dead center P2.

The above is described in function of the holder 4 passing the dead center P2 of the biasing element. It shall however be appreciated that the two-wheeler storage device may be designed such that the dead center lies just beyond the loading position, i.e. "under the ground". In this situation, the braking element can be described as providing a braking force when the holder approaches the dead center.

It is repeated that the graphs shown in Figs. 9A and 9B assume a theoretical non-zero velocity of the holder 4 over the position. The braking force supplied by a damper would be zero if the holder 4 is not moving, i.e. in rest, only to increase as the velocity of the holder 4 increases.

It is also repeated that the graphs shown in Figs. 8, 9A and 9B are theoretical and serve the purpose of illustration. Graphs of actual embodiments might differ greatly from these graphs depending on the design of the two-wheeler storage device and on the characteristics of the components used with the two-wheeler storage device.

One of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims. It may be understood that the embodiments shown have the same or similar components, apart from where they are described as being different.

The following claims are hereby incorporated into the detailed description, with each claim standing on its own as a separately claimed subject matter. The mere fact that certain measures are recited in mutually different claims does not indicate that a combination of these measures cannot be used to an advantage. Many variants will be apparent to the person skilled in the art which are understood to be comprised within the scope of the disclosure defined in the following claims.

Herein, the invention is described with reference to specific examples of embodiments of the invention. The specifications, figures and examples are, accordingly, to be regarded in an illustrative sense rather than in a restrictive sense. Further, many of the elements that are described may be functional entities that may be implemented as discrete or distributed components or in conjunction with other components, in any suitable combination and location as long as they fall within the scope of the appended claims.

## Claims

1. Device for storing a two-wheeler, the device comprising:
a frame (2);
a holder (4) arranged to hold a two-wheeler wherein the holder (4) is movably connected to the frame (2), and wherein the holder (4) is adjustable between a storage position for storing the two-wheeler and a loading position for receiving or releasing the two-wheeler;
a biasing element (6), connected to the frame (2) and to the holder(4), wherein the biasing element (6) is arranged to provide a biasing force, wherein the biasing force biases the holder (4) towards the storage position; and
a braking element (8) providing a braking force during adjustment of the holder (4) towards the loading position to provide a resulting biasing moment resulting from the biasing force and the braking force,
wherein the biasing element (6) and braking element (8) are integrated in a single biasing compound (22), wherein the braking force increases such that the biasing moment increases during adjustment of the holder (4) from the storage position towards the loading position, wherein an adjustment trajectory of the holder (4) from the storage position towards the loading position comprises a first part in which the resulting biasing moment biases towards the storage position, and **characterised in**
a second part in which the braking element (8) is configured to provide a non-linear braking force to reduce a velocity of the holder (4) towards the loading position.

2. Device according to claim 1, wherein the braking element (8) is configured such that the braking force discretely increases from the first part of the adjustment trajectory to the second part of the adjustment trajectory from the storage position to the loading position.

3. Device according to any of the preceding claims, wherein the braking element (8) is configured such that the braking force is substantially zero in the first part of the adjustment trajectory from the storage position to the loading position or that the braking force increases linearly in the first part of the adjustment trajectory, and the braking force is substantially non-zero and non-linear across the second part of the adjustment trajectory from the storage position to the loading position.

4. Device according to any of the preceding claims, wherein the braking element (8) is configured such that the braking force is constant, being zero or non-zero, when the holder (4) is adjusted from the loading position towards the storage position.

5. Device according to any of the preceding claims, wherein the braking element (8) is arranged such that the braking force further depends on a velocity of the holder (4), in particular across the second part of the trajectory.

6. Device according to any of the preceding claims, wherein the biasing element (6) is a compression element or a tension element.

7. Device according to claim 6, wherein the biasing element (6) is a gas spring.

8. Device according to any of the preceding claims, wherein the holder (4) comprises a gutter for receiving at least one wheel of the two-wheeler.

9. Device according to any of the preceding claims, wherein the holder (4) is movably connected to the frame (2) at a height such that a further two-wheeler may be stored below the holder (4) in the storage position.

10. Device according to any of the preceding claims, further comprising a plurality of holders (4).

11. Method for adjusting a holder of a device according to any of the preceding claims, between a storage position for storing the two-wheeler and a loading position for loading or unloading the two-wheeler, wherein the device comprises a biasing element (6) for biasing the holder towards the storage position, the biasing element inducing a biasing moment during adjustment of the holder, wherein, during adjustment from the storage position to the loading position a braking force is applied such that a resulting biasing moment increases towards the loading position during an adjustment trajectory from storage position to loading position, wherein the braking element (8) provides a non-linear braking force in a second part of the trajectory from the storage position towards the loading position, to reduce a velocity of the holder in the second part of the trajectory towards the loading position.

## Patentansprüche

1. Vorrichtung zum Aufbewahren eines Zweirads, die Vorrichtung umfassend:
einen Rahmen (2);
einen Halter (4), der zum Halten eines Zweirads angeordnet ist, wobei der Halter (4) beweglich mit dem Rahmen (2) verbunden ist, und wobei der Halter (4) zwischen einer Lagerungsposition zum Lagern des Zweirads und einer Ladeposition zum Aufnehmen oder Freigeben des Zweirads verstellbar ist;
ein Vorspannelement (6), das mit dem Rahmen (2) und dem Halter (4) verbunden ist, wobei das Vorspannelement (6) zum Bereitstellen einer Vorspannkraft angeordnet ist, wobei die Vorspannkraft den Halter (4) in Richtung der Lagerposition vorspannt; und
ein Bremselement (8), das eine Bremskraft während der Einstellung des Halters (4) in Richtung der Ladeposition bereitstellt, um ein resultierendes Vorspannmoment bereitzustellen, das sich aus der Vorspannkraft und der Bremskraft ergibt,
wobei das Vorspannelement (6) und das Bremselement (8) in einer einzigen Vorspannverbindung (22) integriert sind,
wobei die Bremskraft derart ansteigt, dass das Vorspannmoment während der Einstellung des Halters (4) von der Lagerposition in Richtung der Ladeposition ansteigt, wobei eine Einstelltrajektorie des Halters (4) von der Lagerposition in Richtung der Ladeposition einen ersten Teil umfasst, in dem das resultierende Vorspannmoment in Richtung der Lagerposition vorspannt, und
**gekennzeichnet durch** einen zweiten Teil, in dem das Bremselement (8) zum Bereitstellen einer nichtlinearen Bremskraft konfiguriert ist, um eine Geschwindigkeit des Halters (4) in Richtung der Ladeposition zu reduzieren.

2. Vorrichtung nach Anspruch 1, wobei das Bremselement (8) so konfiguriert ist, dass die Bremskraft von dem ersten Teil der Einstelltrajektorie zu dem zweiten Teil der Einstelltrajektorie von der Lagerposition zu der Ladeposition diskret zunimmt.

3. Vorrichtung nach einem der vorstehenden Ansprüche, wobei das Bremselement (8) so konfiguriert ist, dass die Bremskraft in dem ersten Teil der Einstelltrajektorie von der Lagerposition zu der Ladeposition im Wesentlichen null ist oder dass die Bremskraft in dem ersten Teil der Einstelltrajektorie linear ansteigt und die Bremskraft in dem zweiten Teil der Einstelltrajektorie von der Lagerposition zu der Ladeposition im Wesentlichen nicht null und nicht linear ist.

4. Vorrichtung nach einem der vorstehenden Ansprüche, wobei das Bremselement (8) so konfiguriert ist, dass die Bremskraft konstant ist, d.h. Null oder nicht Null ist, wenn der Halter (4) von der Ladeposition in Richtung der Lagerposition verstellt wird.

5. Vorrichtung nach einem der vorstehenden Ansprüche, wobei das Bremselement (8) so angeordnet ist, dass die Bremskraft ferner von einer Geschwindigkeit des Halters (4) abhängt, insbesondere über den zweiten Teil der Trajektorie.

6. Vorrichtung nach einem der vorstehenden Ansprüche, wobei das Vorspannelement (6) ein Druckelement oder ein Zugelement ist.

7. Vorrichtung nach Anspruch 6, wobei das Vorspannelement (6) eine Gasfeder ist.

8. Vorrichtung nach einem der vorstehenden Ansprüche, wobei der Halter (4) eine Rinne zum Aufnehmen mindestens eines Rades des Zweirads umfasst.

9. Vorrichtung nach einem der vorstehenden Ansprüche, wobei der Halter (4) mit dem Rahmen (2) in einer solchen Höhe beweglich verbunden ist, dass ein weiteres Zweirad in der Lagerposition unter dem Halter (4) gelagert werden kann.

10. Vorrichtung nach einem der vorstehenden Ansprüche, ferner umfassend eine Vielzahl von Haltern (4).

11. Verfahren zum Einstellen eines Halters einer Vorrichtung nach einem der vorstehenden Ansprüche zwischen einer Lagerposition zum Lagern des Zweirads und einer Ladeposition zum Laden oder Entladen des Zweirads, wobei die Vorrichtung ein Vorspannelement (6) zum Vorspannen des Halters in Richtung der Lagerposition umfasst, wobei das Vorspannelement ein Vorspannmoment während des Einstellens des Halters induziert, wobei, während der Einstellung von der Lagerposition in die Ladeposition eine Bremskraft aufgebracht wird, so dass ein resultierendes Vorspannmoment in Richtung der Ladeposition während einer Einstelltrajektorie von der Lagerposition zur Ladeposition zunimmt, wobei das Bremselement (8) eine nichtlineare Bremskraft in einem zweiten Teil der Trajektorie von der Lagerposition zu der Ladeposition bereitstellt, um eine Geschwindigkeit des Halters in dem zweiten Teil der Trajektorie zu der Ladeposition zu reduzieren.

## Revendications

1. Dispositif de stockage de deux-roues, le dispositif comprenant :
un châssis (2) ;
un support (4) prévu pour maintenir un deux-roues, dans lequel le support (4) est relié de manière mobile au châssis (2), et dans lequel le support (4) est réglable entre une position de stockage destinée à stocker le deux-roues et une position de chargement destinée à recevoir ou libérer le deux-roues ;
un élément d'inclinaison (6), relié au châssis (2) et au support (4), dans lequel l'élément d'inclinaison (6) est prévu pour fournir une force d'inclinaison, dans lequel la force d'inclinaison incline le support (4) vers la position de stockage ; et
un élément de freinage (8) qui fournit une force de freinage pendant le réglage du support (4) vers la position de chargement afin de provoquer un moment d'inclinaison résultant qui résulte de la force d'inclinaison et de la force de freinage,
dans lequel l'élément d'inclinaison (6) et l'élément de freinage (8) sont intégrés à un seul composé d'inclinaison (22),
dans lequel la force de freinage augmente de sorte que le moment d'inclinaison augmente pendant le réglage du support (4) de la position de stockage vers la position de chargement, dans lequel une trajectoire de réglage du support (4) de la position de stockage vers la position de chargement comprend une première partie dans laquelle le moment d'inclinaison résultant provoque une inclinaison vers la position de stockage,
et **caractérisé en ce que**
une deuxième partie dans laquelle l'élément de freinage (8) est configuré pour fournir une force de freinage non linéaire afin de réduire une vitesse du support (4) vers la position de chargement.

2. Dispositif selon la revendication 1, dans lequel l'élément de freinage (8) est configuré de sorte que la force de freinage augmente discrètement entre la première partie de la trajectoire de réglage et la deuxième partie de la trajectoire de réglage, de la position de stockage vers la position de chargement.

3. Dispositif selon l'une quelconque des revendications précédentes, dans lequel l'élément de freinage (8) est configuré de sorte que la force de freinage soit sensiblement nulle dans la première partie de la trajectoire de réglage entre la position de stockage et la position de chargement, ou que la force de freinage augmente linéairement dans la première partie de la trajectoire de réglage, et que la force de freinage soit sensiblement non nulle et non linéaire dans la deuxième partie de la trajectoire de réglage entre la position de stockage et la position de chargement.

4. Dispositif selon l'une quelconque des revendications précédentes, dans lequel l'élément de freinage (8) est configuré de sorte que la force de freinage soit constante, en étant nulle ou non nulle, lorsque le support (4) est réglé de la position de chargement vers la position de stockage.

5. Dispositif selon l'une quelconque des revendications précédentes, dans lequel l'élément de freinage (8) est prévu de sorte que la force de freinage dépende en outre d'une vitesse du support (4), en particulier dans la deuxième partie de la trajectoire.

6. Dispositif selon l'une quelconque des revendications précédentes, dans lequel l'élément d'inclinaison (6) est un élément de compression ou un élément de tension.

7. Dispositif selon la revendication 6, dans lequel l'élément d'inclinaison (6) est un ressort à gaz.

8. Dispositif selon l'une quelconque des revendications précédentes, dans lequel le support (4) comprend une gouttière destinée à recevoir au moins une roue du deux-roues.

9. Dispositif selon l'une quelconque des revendications précédentes, dans lequel le support (4) est relié de manière mobile au châssis (2) à une hauteur telle qu'un autre deux-roues peut être stocké sous le support (4) dans la position de stockage.

10. Dispositif selon l'une quelconque des revendications précédentes, comprenant en outre une pluralité de supports (4).

11. Procédé de réglage d'un support d'un dispositif selon l'une quelconque des revendications précédentes, entre une position de stockage destine à stocker le deux-roues et une position de chargement destinée à charger ou décharger le deux-roues, dans lequel le dispositif comprend un élément d'inclinaison (6) destiné à incliner le support vers la position de stockage, l'élément d'inclinaison induisant un moment d'inclinaison pendant le réglage du support, dans lequel, pendant le réglage de la position de stockage vers la position de chargement, une force de freinage est appliquée de sorte qu'un moment d'inclinaison résultant augmente vers la position de chargement pendant une trajectoire de réglage de la position de stockage vers la position de chargement, dans lequel l'élément de freinage (8) fournit une force de freinage non linéaire dans une deuxième partie de la trajectoire entre la position de stockage et la position de chargement, afin de réduire une vitesse du support dans la deuxième partie de la trajectoire vers la position de chargement.
